# EUROPÄISCHE PATENTSCHRIFT

(11) **EP 0 674 046 B1**
(45) Veröffentlichungstag und Bekanntmachung des Hinweises auf die Patenterteilung: **09.06.1999**
(21) Anmeldenummer: 95103329.9
(22) Anmeldetag: 08.03.1995
(51) Int. Cl.: D21H 21/02, D21H 17/54

(54) **Verfahren zur Störstoffixierung bei der Papierherstellung**
Process for controlling the impurities in papermaking
Procédé d'élimination des impuretés lors de la fabrication de papier

(30) Priorität: 21.03.1994 DE 4409580
(43) Veröffentlichungstag der Anmeldung: 27.09.1995
(73) Patentinhaber: BAYER AG, 51368 Leverkusen (DE)
(72) Erfinder: König, Joachim, Dr., D-51519 Odenthal (DE); Kopp, Jurgen, D-51519 Odenthal (DE); Hendricks, Udo-Winfried, Dr., D-51519 Odenthal (DE); Reiners, Jürgen, Dr., D-51373 Leverkusen (DE); Nowak, Peter, D-41539 Dormagen (DE)

(56) Entgegenhaltungen:
- DE-A- 2 112 878
- DE-A- 3 001 242
- DE-A- 3 635 459
- DE-A- 3 905 049
- DE-A- 3 940 481
- US-A- 5 135 613

## Beschreibung

Gegenstand der Erfindung ist ein Verfahren zur Fixierung von Störstoffen bei der Papierherstellung.

Bei der Erzeugung und Verarbeitung von Zellstoff, Halbzellstoff, Holzstoff und Altpapier entstehen verschiedene wasserlösliche und kolloidal gelöste Substanzen anorganischer und insbesondere organischer Natur, die in den Wasserkreislauf der Papiermaschine gelangen. Sie stammen aus dem Frischwasser (Salze und Huminsäuren), aus den Rohstoffen (Ligninderivate und Hemicellulosen) und aus den mitverwendeten Papierhilfsmitteln (z.B. Dispergiermittel und Bindemittel).

Durch die zunehmende Einengung und Schließung der Wasserkreisläufe in den Papierfabriken, die in den letzten Jahren vorgenommen wurden, um den Frischwasserverbrauch und die Abwassermenge zu senken, steigt die Konzentration dieser wasserlöslichen Substanzen erheblich an. Da sie die Produktion von Papier in erheblichem Maße beeinträchtigen, faßt man sie unter dem Begriff Störstoffe zusammen.

Nach Auhorn, "Wochenblatt für Papierfabrikation 112, 37-48 (1984)", sind Störstoffe gelöste oder kolloidal gelöste anionische Oligomere oder Polymere und nichtionogene Hydrokolloide. Sie können zu Koagulatbildung und Ablagerungen im Wasserkreislauf der Papiermaschine und im Stoffautlauf führen, beeinträchtigen das Laufverhalten der Papiermaschine und können Abrisse der Papierbahn verursachen.

Zudem ist eine Verschlechterung der Retention, der Entwässerung, der Blattbildung sowie der Papierfestigkeit zu beobachten. Die Wirksamkeit praktisch aller chemischen Hilfsmittel wird durch die Störstoffe beeinträchtigt. Genannt seien Retentions- und Entwässerungshilfsmittel, Naß- und Trockenfestmittel, Leimungsmittel und Farbstoffe.

Mit Fixierung der Störstoffe ist das Binden dieser Stoffe an der Cellulose bezeichnet. Sie werden auf diese Weise zusammen mit dem erzeugten Papier aus dem Wasserkreislauf ausgeschleust, so daß ihre Konzentration niedrig bleibt.

Der Zusatz von saurem Aluminiumsulfat ist grundsätzlich zur Fixierung dieser Störstoffe am Faserstoff geeignet, jedoch wegen der heute üblichen Fahrweise im neutralen pH-Bereich und wegen der zunehmenden Verwendung von Calciumcarbonat als Streich- und Füllpigment häufig nicht mehr erwünscht.

Für die Papierherstellung im neutralen Bereich wurden verschiedene Störstoffänger vorgeschlagen, z.B. Polydiallyldimethylammoniumchlorid (PolyDADMAC) (Arheiliger und von Medvey, Wochenblatt für Papierfabrikation 114 (1986), 958), Polymerisate auf Basis quaternierter Dimethylaminopropylacrylamide und -methacrylamide (DE-A-3 905 049) oder auch Polyethylenimine. Diese Substanzen sind jedoch nur in Einzelfällen ausreichend wirksam und verschlechtern wichtige Papiereigenschaften wie den Weißgrad. Es bestand deshalb weiterhin Bedarf an geeigneten Störstoffängern besonders für das Arbeiten im Neutralbereich.

Es wurde gefunden, daß sich zur Fixierung von Störstoffen kationische Polykondensate eignen, die durch Umsetzen eines
a) monofunktionellen oder polyfunktionellen Amins mit einer oder mehreren primären und/oder sekundären und/oder tertiären Aminogruppe mit
b) Cyanamid, Dicyandiamid, Guanidin oder Biguanidin, wobei bis zu 50 Molprozent von Cyanamid, Dicyandiamid oder Biguandin durch eine Dicarbonsäure oder einen Mono- oder Diester davon ersetzt werden können, unter Abspaltung von Ammoniak, gegebenenfalls in Gegenwart eines Katalysators, erhalten worden sind.

Diese Polykondensate sind bekannt, ihre Herstellung ist beispielsweise in DE-C-855 001, DE-A-2 112 878, DE-A-3 525 104 und DE-A-3 940 481 beschrieben. Insbesondere geeignet sind Polykondensate, die nach den Angaben der DE-A-3 940 481 in Gegenwart von Ammonsalzen und gegebenenfalls in Gegenwart organischer Lösungsmittel hergestellt wurden.

Besonders geeignet sind beispielsweise Polykondensate aus Polyalkylenpolyaminen, insbesondere Polyethylenpolyaminen, und Guanidin, Cyanamid und insbesondere Dicyandiamid.

Besonders bevorzugt sind Polykondensate. die aus Polyethylenpolyaminen und Dicyandiamid im Molverhältnis 2:1 bis 1:2 in Gegenwart von 0,05 bis 0,5 mol eines Ammoniumsalzes, bezogen auf die molare Menge an Dicyandiamid, in Gegenwart hydroxylgruppenhaltiger organischer Lösemittel nach den Angaben der DE-A-39 40 481 hergestellt wurden.

Durch die Verwendung der erfindungsgemäßen Polykondensate gelingt es. die Wirksamkeit der meisten üblichen Papierhilfsmittel entscheidend zu verbessern. Positive Effekte können erreicht werden, z.B. bei der Beschleunigung der Entwässerung in Gegenwart üblicher Retentions- und Entwässerungshilfsmittel auf Basis von Polyethyleniminen, Polyamidaminen und Polyacrylamiden. Entscheidend verbessert wird die Wirksamkeit von üblichen Naßfestmitteln auf Basis von Polyamidamin-Epichlorhydrin-Harzen. Besonders positive Effekte werden erreicht bei Kombination der erfindungsgemäßen Störstoffänger mit OX-freien (kein organisch gebundenes Halogen enthaltenden) Naßfestmitteln auf Basis von wasserdispergierbaren nichtionogenen oder kationischen Polyisocyanaten, wie sie in DE-A-4 211 480.2 und der DE-A-42 26 110.4 beschrieben sind. Geeignet sind die Störstoffänger ebenso zur Verbesserung der Wirksamkeit von üblichen Masseleimungsmitteln. Trockenfestmitteln wie kationischer Stärke, wie zur Erhöhung der Farbausbeute bei substantiven und kationischen Papierfarbstoffen.

Die erfindungsgemäßen Störstoffänger können in Mengen von 0,01 bis 5 % bezogen auf Zellstoff eingesetzt werden. Bevorzugt sind Mengen von 0,1 bis 2 %.

Die optimale Einsatzmenge der Störstoffänger hängt von der Belastung des Stoffsystem der Papiermaschine mit Störstoffen ab und kann durch Vorversuche bzw. durch Kontrolle des Ladungszustandes des Stoffsystems, z.B. durch eine Polyelektrolyttitration oder durch eine Zetapotentialmessung ermittelt werden. Eine Überdosierung des Störstoffängers ist zu vermeiden, da in solchen Fällen die Wirksamkeit der Papierhilfsmittel wiederum beeinträchtigt werden kann.

### Herstellung der kationischen Polykondensate nach DE-A-3 940 481

### Beispiel 1

277,2 Teile Dicyandiamid werden in 240 Teilen Diethylenglykol suspendiert und mit 309 Teilen Diethylentriamin vermischt, wobei die Temperatur auf ca. 40 bis 45°C ansteigt. 24 Teile Ammoniumchlorid werden zugesetzt, und die Mischung wird in 20 Minuten auf 110°C erhitzt, wobei ab 50°C Ammoniak-Entwicklung einsetzt. Das entweichende Ammoniak wird in einer Tiefkühlfalle aufgefangen. Das Reaktionsgemisch wird durch kontinuierliche Temperatursteigerung in 2 Stunden auf 150°C erhitzt und 60 Minuten bei 150°C gerührt. Die Ammoniak-Entwicklung hat dann fast vollständig aufgehört, es ist eine klare hochviskose Schmelze entstanden. Man läßt die Reaktionsmischung auf ca. 140°C abkühlen und läßt rasch 600 Teile Wasser einlaufen, wobei eine klare Lösung entsteht, die auf 40 bis 50°C abgekühlt wird. Mit 275 Teilen 36,5 %iger Salzsäure wird die Lösung unter Kühlung auf einen pH-Wert von 6,5 bis 7,0 eingestellt. Man erhält 1555 g einer klaren, hellgelben Lösung mit einem Trockengehalt von 49,5 %, die durch Verdünnen mit Wasser auf einen Feststoffgehalt von 42 % eingestellt wird.

### Prüfung der Störstoff-Fixierung

### Anwendungsbeispiel 1

Anwendungsbeispiel 1 zeigt die Wirksamkeit der kationischen Polykondensate bei der Entwässerung von Altpapier. Die Prüfung der Stoffentwässerung erfolgt nach der Schopper-Riegler-Methode, wobei die Auslaufzeit einer bestimmten Menge Wasser gemessen wird.

Als Prüfstoff verwendet man einen Altpapierstoff, der wie folgt bereitet wird:
120 g alte Zeitungen und 30 g Schrenz werden in 4,5 l heißem Wasser ca. 30 min eingeweicht und anschließend mit einem Pendraulik-Rührwerk 15 Minuten lang bei höchster Drehzahl (ca. 5000 Upm) aufgeschlagen, bis ein Mahlgrad von ca. 60° SR erreicht ist. Nach dem Aufschlagen setzt man 15 g China Clay und 0,75 g Aluminiumsulfat sowie als Störstoff 1 g einer ca. 50 %igen Schwarzlauge aus der Sulfitzellstoff-Herstellung zu und füllt auf 10 l Gesamtvolumen auf, so daß eine Stoffdichte von 1,5 % resultiert.

Von dieser Mischung werden 200 ml in einem Mahlgradbecher gegeben, mit Wasser auf 1 l Gesamtvolumen aufgefüllt und in ein Mahlgrad-Prüfgerät gegeben. Gemessen wird die Zeit bis zum Auslaufen von 700 ml Wasser, wobei dieser Wert als Blindwert dient.

Gibt man zu dieser Mischung 9 mg eines handelsüblichen Retentionsmittel auf Basis Polyamidamin, so wird als Nullwert eine niedrigere Entwässerungszeit gemessen, die aber für Praxisbedingungen noch nicht befriedigend ist.

In weiteren Versuchen gibt man steigende Mengen des nach Beispiel 1 hergestellten Störstoffängers (42%ige Lösung) vor dem Retentionsmittel in das Stoffsystem, um die vorhandenen Störstoffe zu fixieren. Dadurch wird die Entwässerungszeit in Abhängigkeit von der zugesetzten Menge an Störstoffänger weiter verringert, bis ein für Praxisbedingungen gewünschtes Niveau erreicht ist (Tab. 1).

**Tab. 1:**

| Entwässerungsversuche nach Schopper-Riegler | | | |
|---|---|---|---|
| | Störstoffänger nach Beispiel 1 (42 %ige Lösung) (Einsatz in % bez. auf Zellstoff) | Entwässerungshilfsmittel Polyamidamin (38 %ige Lösung) (Einsatz in % bez. auf Zellstoff) | Entwässerungszeit (sec) |
| Blindwert | 0 | 0 | 175 |
| | | | |
| Nullwert | 0 | 0,3 | 98,5 |
| | | | |
| erfindungsgem. Verfahren | 0,05 | 0,3 | 72,6 |
| | | | |
| " | 0,1 | 0,3 | 59,7 |
| | | | |
| " | 0.2 | 0,3 | 51,2 |

### Anwendungsbeispiel 2

Anwendungsbeispiel 2 zeigt die Wirksamkeit der erfindungsgemäßen Störstoffänger bei der Naßfestausrüstung von Papier:

Von einem gebleichten Sulfit-Zellstoff mit einer Stoffdichte von 2,5 %, der stark mit Störstoffen belastet ist, werden 100 g in ein Becherglas gegeben und mit Wasser auf 1000 ml verdünnt.

Verwendet werden sowohl ein konventionelles Naßfestmitel auf Basis eines Polyamidamin-Epichlorhydrin-Harz (15 %ige wäßrige Lösung) sowie ein OX-freies Naßfestmittel auf Basis eines schwach kationischen, hydrophilierten Polyisocyanates, das nach DE-A-4 211 480 hergestellt wurde (80 %ige Lösung in einem organischen Lösungsmittel). Die Naßfestmittel werden vor dem Einsatz zu einer 1 %igen wäßrigen Lösung bzw. 1 %igen wäßrigen Dispersion verdünnt und in dieser Form zu der oben beschriebenen Zellstoffsuspension gegeben. Man rührt 5 Minuten bei Raumtemperatur und bildet anschließend auf einem Blattbildner (Rapid-Köthen-Gerät) Papierblätter mit einem Flächengewicht von 80 g/qm. Die Papierblätter werden 10 Minuten bei 90°C getrocknet und im Trockenschrank noch 10 Minuten bei 110°C nacherhitzt.

Aus jedem Papierblatt werden nach Klimatisierung bei Raumtemperatur 5 Prüfstreifen von 1,5 cm Breite ausgeschnitten und 5 Minuten in Leitungswasser eingetaucht. Danach werden die nassen Streifen in einer Reißlängenprüfgerät sofort auf ihre Naßbruchlast geprüft.

Die Ergebnisse sind in Tab. 2 zusammengestellt. (Mengenangaben in % Handelsware bezogen auf Zellstoff).

Wie die Tabelle zeigt, werden in störstoffhaltigen Stoffsystemen mit üblichen Einsatzmengen an Naßfestmitteln nur sehr niedrige und nicht befriedigende Naßfestigkeiten gemessen (Versuche B und E). Ausreichend hohe Naßfestigkeiten werden dagegen nur mit extrem hohen, unwirtschaftlichen Mengen an Naßfestmitteln erreicht (Versuch F) oder aber nach Entfernung der Störstoffe durch ein ebenfalls technisch nicht erwünschtes Waschen des Zellstoffes in einem Filtrationsprozeß (Versuche A und D).

Setzt man jedoch dem störstoffhaltigen Stoffsystem vor der Zugabe des Naßfestmittels die in der Tab. 2 angegebenen Mengen an Störstoffänger zu, werden die vorhandenen Störstoffe abgefangen, so daß wieder die volle Naßfestwirkung erreicht werden kann (Versuche C und G).

**Tab. 2:**

| Naßverfestigung von Papier | | | | |
|---|---|---|---|---|
| | Stoffsystem | Naßfestmittel (Einsatz in % bez. auf Stoff) | Störstoffänger (Einsatz in % bez. auf Stoff) | Naßbruchlast (N) |
| A | Störstofffrei | 6 % Polyamidamin-Epichlorhydrin-Harz (15 %ige Lösung) | - | 15,4 |
| | | | | |
| B | Störstoffhaltig | " | - | 6,8 |
| | | | | |
| C | Störstoffhaltig | " | 1 % kat.Polykondensat nach Beispiel 1 (42 %ige Lösung) | 14 |
| | | | | |
| D | Störstofffrei | 1 % kationisch hydrophiliertes Polyisocyanat (80 %ige Lösung in Propylenglykoldiacetat) | - | 13,2 |
| | | | | |
| E | Störstoffhaltig | " | - | 2,2 |
| | | | | |
| F | Störstoffhaltig | 3 % kat.hydroph. Polyisocyanat | - | 13,6 |
| | | | | |
| G | Störstoffhaltig | 1 % kat.hydroph. Polyisocyanat | 0.5 % kat.Polykondensat nach Beispiel 1 | 14,3 |

## Patentansprüche

1. Verfahren zur Fixierung anionischer Störstoffe bei der Papierherstellung durch Zusatz von Störstoffängern,
dadurch gekennzeichnet, daß als Störstoffänger kationische Polykondensate eingesetzt werden,
die durch Umsetzen eines
a) monofunktionellen oder polyfunktionellen Amins mit einer oder mehreren primären und/oder sekundären und/oder tertiären Aminogruppe mit
b) Cyanamid, Dicyanddiamid, Guanidin oder Biguanidin, wobei bis zu 50 Mol-% von Cyanamid, Dicyandiamid oder Biguandin durch eine Dicarbonsäure oder einen Mono- oder Diester davon ersetzt werden können, unter Abspaltung von Ammoniak, gegebenenfalls in Gegenwart eines Katalysators, erhalten worden sind.

2. Verfahren nach Anspruch 1, dadurch gekennzeichnet, daß die kationischen Polykondensate zusammen mit kationischen oder nichtionogenen Papierhilfsmitteln verwendet werden.

3. Verfahren nach Anspruch 1, dadurch gekennzeichnet, daß die kationischen Polykondensate zusammen mit Retentions- und Entwässerungshilfsmitteln verwendet werden.

4. Verfahren nach Anspruch 1, dadurch gekennzeichnet, daß die kationischen Polykondensate zusammen mit Naßfestmitteln auf Basis Polyamidamin/Epichlorhydrin verwendet werden.

5. Verfahren nach Anspruch 1, dadurch gekennzeichnet, daß die kationischen Polykondensate zusammen mit kationischen und nichtionogenen Naßfestmitteln auf Basis hydrophilierter Polyisocyanate verwendet werden.

6. Verfahren nach Anspruch 1, dadurch gekennzeichnet, daß die kationischen Polykondensate zusammen mit üblichen kationischen Masseleimungsmittekn verwendet werden.

## Claims

1. Process for the fixing of interfering anionic substances in papermaking by adding scavengers for interfering substances,
characterized in that cationic polycondensates
which have been obtained by reaction of a
a) monofunctional or polyfunctional amine having one or more primary and/or secondary and/or tertiary amino groups with
b) cyanamide, dicyandiamide, guanidine or biguanidine, it being possible to replace up to 50 mol% of cyanamide, dicyandiamide or biguanidine with a dicarboxylic acid or with a mono- or diester thereof, with elimination of ammonia, optionally in the presence of a catalyst,
are used as scavengers for interfering substances.

2. Process according to Claim 1, characterized in that the cationic polycondensates are used together with cationic or nonionic paper assistants.

3. Process according to Claim 1, characterized in that the cationic polycondensates are used together with retention aids and drainage aids.

4. Process according to Claim 1, characterized in that the cationic polycondensates are used together with wet strength agents based on polyamidoamine/epichlorohydrin.

5. Process according to Claim 1, characterized in that the cationic polycondensates are used together with cationic and nonionic wet strength agents based on hydrophilized polyisocyanates.

6. Process according to Claim 1, characterized in that the cationic polycondensates are used together with customary cationic engine sizes.

## Revendications

1. Procédé pour la fixation d'impuretés anioniques dans la préparation de papier par addition de fixateurs d'impuretés,
caractérisé en ce que l'on utilise comme fixateurs d'impuretés des polycondensats cationiques,
qui ont été obtenus par réaction
a) d'une amine monofonctionnelle ou polyfonctionnelle présentant un ou plusieurs groupes amino primaires et/ou secondaires et/ou tertiaires avec
b) du cyanamide, du dicyandiamide, de la guanidine ou de la biguanidine, jusqu'à 50 % en mole de cyanamide, de dicyandiamide, ou de biguanidine pouvant être remplacés par un acide dicarboxylique ou un mono- ou diester de celui-ci, avec dissociation d'ammoniac, éventuellement en présence d'un catalyseur.

2. Procédé selon la revendication 1, caractérisé en ce que l'on utilise les polycondensats cationiques avec des auxiliaires du papier cationique ou non ionogène.

3. Procédé selon la revendication 1, caractérisé en ce que l'on utilise les polycondensats cationiques avec des auxiliaires de rétention et de déshydratation.

4. Procédé selon la revendication 1, caractérisé en ce que l'on utilise les polycondensats cationiques avec des agents de résistance à l'état humide à base de polyamidamine/épichlorhydrine.

5. Procédé selon la revendication 1, caractérisé en ce que l'on utilise les polycondensats cationiques avec des agents de résistance à l'état humide cationiques et non ionogènes à base de polyisocyanates hydrophiles.

6. Procédé selon la revendication 1, caractérisé en ce que l'on utilise les polycondensats cationiques avec des agents d'encollage en masse cationiques classiques.
